(19) Europäisches Patentamt
European Patent Office
Office européen des brevets

(11) EP 4 800 063 A1

(12) EUROPEAN PATENT APPLICATION
published in accordance with Art. 153(4) EPC

(43) Date of publication:
**02.09.2026 Bulletin 2026/36**

(21) Application number: **24882241.3**

(22) Date of filing: **15.10.2024**

(51) International Patent Classification (IPC):
***C08L 23/10*** *(2006.01)* ***C08K 3/013*** *(2018.01)*
***C08L 23/08*** *(2025.01)*

(52) Cooperative Patent Classification (CPC):
**C08K 3/013; C08L 23/08; C08L 23/10; C08L 23/14**

(86) International application number:
**PCT/JP2024/036661**

(87) International publication number:
**WO 2025/089128 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 JP 2023182151**

(71) Applicant: **Sumitomo Chemical Company, Limited**
**Tokyo 103-6020 (JP)**

(72) Inventors:
- **FUKURODA, Hiroshi**
  **Ichihara-shi, Chiba 299-0195 (JP)**
- **KANZAKI, Susumu**
  **Ichihara-shi, Chiba 299-0195 (JP)**

(74) Representative: **Vossius & Partner Patentanwälte Rechtsanwälte mbB**
**Siebertstraße 3**
**81675 München (DE)**

# (54) PROPYLENE RESIN COMPOSITION AND MOLDED BODY

(57) Provided are a molded article having excellent low-temperature impact strength and a propylene resin composition as a raw material thereof. A propylene resin composition contains a recycled resin having a swell ratio of 1.3 or more and a virgin propylene polymer.

EP 4 800 063 A1

## Description

TECHNICAL FIELD

The present invention relates to a propylene resin composition and a molded article.

BACKGROUND ART

A molded article formed of a propylene resin composition is used for an automobile material, a household electric appliance material, a container packaging material, and the like.

PRIOR ART DOCUMENTS

PATENT DOCUMENT

Patent Document 1: JP-A-2007-277366

SUMMARY OF THE INVENTION

PROBLEMS TO BE SOLVED BY THE INVENTION

In recent years, a molded article used for an automobile material and the like has been required to have high low-temperature impact strength.

An object of the present application is to provide a propylene resin composition capable of producing a molded article having excellent low-temperature impact strength. Another object of the present invention is to provide a molded article having excellent low-temperature impact strength.

MEANS FOR SOLVING THE PROBLEMS

The present invention relates to the following inventions, but is not limited thereto.

[Invention 1]

A propylene resin composition containing a recycled resin having a swell ratio of 1.3 or more as measured under the following conditions, and a virgin propylene polymer:
measurement temperature = 220°C, orifice L/D = 40 mm/1 mm, shear rate = 2,432 $sec^{-1}$.

[Invention 2]

The propylene resin composition according to Invention 1, in which the recycled resin contains at least one selected from the group consisting of a propylene polymer and an ethylene-$\alpha$-olefin copolymer.

[Invention 3]

The propylene resin composition according to Invention 2, in which the propylene resin composition contains, as the propylene polymer, at least one selected from the group consisting of a propylene homopolymer and a heterophasic propylene polymer material.

[Invention 4]

The propylene resin composition according to any one of Inventions 1 to 3, in which a plurality of recycled resins are contained as the recycled resin.

[Invention 5]

The propylene resin composition according to any one of Inventions 1 to 4, in which the virgin propylene polymer includes a propylene polymer.

[Invention 6]

The propylene resin composition according to Invention 5, in which the propylene resin composition contains, as the propylene polymer, at least one selected from the group consisting of a propylene homopolymer and a heterophasic propylene polymer material.

[Invention 7]

The propylene resin composition according to any one of Inventions 1 to 6, further containing an inorganic filler.

[Invention 8]

The propylene resin composition according to Invention 7, in which the inorganic filler includes a recycled inorganic filler.

[Invention 9]

The propylene resin composition according to any one of Inventions 1 to 8, in which the propylene resin composition contains an ethylene-α-olefin copolymer as a component other than the recycled resin.

[Invention 10]

A molded article containing the propylene resin composition according to any one of Inventions 1 to 9.

[Invention 11]

A method for producing the propylene resin composition according to any one of Inventions 1 to 9.

[Invention B1]

A propylene resin composition containing a recycled resin having a swell ratio of 1.3 or more as measured under the following conditions, and a virgin propylene polymer:
measurement temperature = 220°C, orifice L/D = 40 mm/1 mm, shear rate = 2,432 $sec^{-1}$.

[Invention B2]

The propylene resin composition according to Invention B1, in which the swell ratio of the recycled resin is 2.0 or less.

[Invention B3]

The propylene resin composition according to Invention B1 or B2, in which the recycled resin is a recycled propylene composition containing a propylene polymer.

[Invention B4]

The propylene resin composition according to any one of Inventions B1 to B3, in which the virgin propylene polymer is a heterophasic propylene polymer material.

[Invention B5]

The propylene resin composition according to any one of Inventions B1 to B4, in which a content of the recycled resin is 30 to 90 parts by weight with respect to 100 parts by weight of the propylene resin composition.

[Invention B6]

The propylene resin composition according to any one of Inventions B1 to B5, in which a content of the virgin propylene polymer is 10 to 70 parts by weight with respect to 100 parts by weight of the propylene resin composition.

[Invention B7]

The propylene resin composition according to any one of Inventions B1 to B6, in which a total amount of polymers contained is 70 wt% or more based on a total weight of the propylene resin composition.

[Invention B8]

The propylene resin composition according to any one of Inventions B1 to B7, in which the recycled resin contains an ethylene-$\alpha$-olefin copolymer.

[Invention B9]

The propylene resin composition according to Invention B3, in which the propylene resin composition contains, as the propylene polymer, at least one selected from the group consisting of a propylene homopolymer and a heterophasic propylene polymer material.

[Invention B10]

The propylene resin composition according to any one of Inventions B1 to B9, in which a recycled resin that is different from the recycled resin and has a swell ratio of 1.3 or more as measured under the conditions described in Invention B1 (referred to as "different recycled resin") is contained.

[Invention B11]

The propylene resin composition according to Invention B10, in which the different recycled resin contains an ethylene-$\alpha$-olefin copolymer.

[Invention B12]

The propylene resin composition according to any one of Inventions B1 to B11, in which the virgin propylene polymer includes a propylene homopolymer.

[Invention B13]

The propylene resin composition according to any one of Inventions B1 to B12, further containing an inorganic filler.

[Invention B14]

The propylene resin composition according to Invention B13, in which the inorganic filler includes a recycled inorganic filler.

[Invention B15]

The propylene resin composition according to any one of Inventions B1 to B14, in which the propylene resin composition contains an ethylene-$\alpha$-olefin copolymer as a component other than the recycled resin.

[Invention B16]

A molded article containing the propylene resin composition according to any one of Inventions B1 to B15.

[Invention B17]

A method for producing the propylene resin composition according to any one of Inventions B1 to B15, the method including a step of melt-kneading the recycled resin and the virgin propylene polymer.

[Invention C1]

A propylene resin composition containing a recycled resin having a swell ratio of 1.3 or more and 2.0 or less as measured under the following conditions, and a virgin propylene polymer,

in which the recycled resin is a recycled propylene composition containing a propylene polymer, and
the virgin propylene polymer is a heterophasic propylene polymer material:
measurement temperature = 220°C, orifice L/D = 40 mm/1 mm, shear rate = 2,432 $sec^{-1}$.

[Invention C2]

The propylene resin composition according to Invention C1, in which a content of the recycled resin is 30 to 90 parts by weight with respect to 100 parts by weight of the propylene resin composition.

[Invention C3]

The propylene resin composition according to Invention C1 or C2, in which a content of the virgin propylene polymer is 10 to 70 parts by weight with respect to 100 parts by weight of the propylene resin composition.

[Invention C4]

The propylene resin composition according to any one of Inventions C1 to C3, in which a total amount of polymers contained is 70 wt% or more based on a total weight of the propylene resin composition.

[Invention C5]

The propylene resin composition according to any one of Inventions C1 to C4, in which the recycled resin contains an ethylene-α-olefin copolymer.

[Invention C6]

The propylene resin composition according to any one of Inventions C1 to C5, in which the propylene resin composition contains, as the propylene polymer, at least one selected from the group consisting of a propylene homopolymer and a heterophasic propylene polymer material.

[Invention C7]

The propylene resin composition according to any one of Inventions C1 to C6, in which a recycled resin that is different from the recycled resin and has a swell ratio of 1.3 or more as measured under the conditions described in Invention C1 (referred to as "different recycled resin") is contained.

[Invention C8]

The propylene resin composition according to Invention C7, in which the different recycled resin contains an ethylene-α-olefin copolymer.

[Invention C9]

The propylene resin composition according to any one of Inventions C1 to C8, in which the virgin propylene polymer includes a propylene homopolymer.

[Invention C10]

The propylene resin composition according to any one of Inventions C1 to C9, in which the propylene resin composition contains a propylene homopolymer as a virgin propylene polymer different from the virgin propylene polymer.

[Invention C11]

The propylene resin composition according to any one of Inventions C1 to C10, further containing an inorganic filler.

[Invention C12]

The propylene resin composition according to Invention C11, in which the inorganic filler includes a recycled inorganic filler.

[Invention C13]

The propylene resin composition according to any one of Inventions C1 to C12, in which the propylene resin composition contains an ethylene-α-olefin copolymer as a component other than the recycled resin.

[Invention C14]

A molded article containing the propylene resin composition according to any one of Inventions C1 to C13.

[Invention C15]

A method for producing the propylene resin composition according to any one of Inventions C1 to C13, the method including a step of melt-kneading the recycled resin and the virgin propylene polymer.

EFFECT OF THE INVENTION

According to the present invention, a molded article having excellent low-temperature impact strength and a propylene resin composition as a raw material thereof can be provided.

MODE FOR CARRYING OUT THE INVENTION

Definition

In the present specification, the term "propylene polymer" means a polymer having 50 wt% or more of monomer units derived from propylene. Details will be described below.

In the present specification, the term "propylene resin composition" means a composition containing a propylene polymer. Details will be described below.

In the present specification, the term "α-olefin" means an aliphatic unsaturated hydrocarbon having a carbon-carbon unsaturated double bond at the α-position.

In the present specification, the term "C4-10 hydrocarbon group" means a hydrocarbon group having 4 to 10 carbon atoms. The same applies to other similar expressions.

In the present specification, the term "ethylene-α-olefin copolymer" means a copolymer containing monomer units derived from ethylene and monomer units derived from α-olefins of C4 or higher (meaning 4 or more carbon atoms, and the same applies to other similar expressions), and substantially free of monomer units derived from propylene. Details will be described below.

In the present specification, the term "heterophasic propylene polymer material" means a mixture containing a polymer I containing 80 wt% or more of monomer units derived from propylene (provided that a total weight of the polymer I is 100 wt%), and a polymer II containing monomer units derived from at least one α-olefin selected from the group consisting of ethylene and C4-12 α-olefins and monomer units derived from propylene.

In the present specification, the term "xylene-insoluble component (also referred to as "CXIS component")" means a component contained in a polymer that is insoluble in p-xylene, and refers to a solid obtained by the following method:

a method in which about 2 g of a polymer is dissolved in boiling p-xylene for 2 hours to obtain a solution, and then the solution is cooled to 20°C to precipitate a solid.

In the present specification, the term "xylene-soluble component (also referred to as "CXS component")" means a component other than the "CXIS component" in the polymer.

All numbers disclosed in the present specification are approximate values, regardless of whether the term "about" or "approximate" is used in connection therewith. The number may vary by 1 percent, 2 percent, 5 percent, or

sometimes, 10 to 20 percent. Whenever a numerical range with a lower limit RL and an upper limit RU is disclosed, any numerical value falling within the range is specifically disclosed. In particular, the following numbers within the range are specifically disclosed: R = RL + k*(RU - RL) (in the equation, k is a variable ranging from 1 percent to 100 percent with a 1 percent increment, that is, k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent). Moreover, any numerical range defined by two R numbers as defined in the above is also specifically disclosed.

The description of "a lower limit to an upper limit" indicating a numerical range denotes "a lower limit or more and an upper limit or less", and the description of "an upper limit to a lower limit" indicating a numerical range denotes "an upper limit or less and a lower limit or more". That is, these descriptions represent a numerical range including a lower limit and an upper limit, and in one aspect, one or both of the upper limit and the lower limit may be excluded, that is, "the lower limit to the upper limit" may represent "more than the lower limit and the upper limit or less", "the lower limit or more and less than the upper limit", or "more than the lower limit and less than the upper limit". Similarly, "xx or more" may represent "more than xx", and "xx or less" may represent "less than xx".

Hereinafter, some embodiments of the present invention will be described in detail. However, the present invention is not limited to the following embodiments.

Propylene resin composition

The "propylene resin composition" of the present invention contains a recycled resin having a swell ratio of 1.3 or more and a virgin propylene polymer. The swell ratio is measured under the following conditions.

Measurement temperature = 220°C, orifice L/D=40 mm/1 mm, shear rate = 2,432 $sec^{-1}$.

Recycled resin

In the present specification, the term "recycled resin" means a resin that is reused after being subjected to processing such as molding once or after being used for an end use and then subjected to a recovery step. The same applies to other "recycled xxx".

Examples of the raw material used in the recovery step include used interior parts of automobiles (instrument panels, door trims, and the like), exterior parts of automobiles (bumpers and the like), other automobile parts (battery cases and the like), packaging containers (food retort pouches, refilling pouches, detergent bottles, and the like), housings of household electrical appliances, office supplies (trays and the like), and household daily necessities (contact lens cases and the like). These recovered raw materials may contain an elastomer component that enhances impact resistance such as an ethylene-$\alpha$-olefin copolymer and/or an additive such as a filler, for example, an inorganic filler, a neutralizing agent, an antioxidant, an ultraviolet absorber, a nucleating agent, a lubricant, an antistatic agent, an antiblocking agent, a coloring agent (an inorganic pigment, an organic pigment, a pigment dispersant, and the like), or a flame retardant depending on the application. The recovery process is not particularly limited, and examples thereof include known methods.

In one aspect, a process of preparing the recycled resin may include an arbitrary step other than the recovery step, for example, a crushing step, a purification step, a melting step, a kneading step with another substance, and a molding step into a pellet form. Examples of the purification step include washing with water and an aqueous and/or oily agent, microbial treatment, magnetic sorting, and specific gravity sorting. Examples of the molded article include, but are not limited to, injection molded bodies.

In the present specification, the term "virgin propylene polymer" means a propylene polymer that is not molded in a product such as an automobile or a part thereof after production of the propylene polymer by a process including a polymerization step, and is not used for any end use, unlike "Recycled propylene polymer" described above. The same applies to other "virgin xxx".

Swell ratio

The swell ratio is a degree of expansion of a strand diameter of a thermoplastic elastomer composition relative to an orifice diameter when a molten thermoplastic elastomer composition is extruded from an orifice using a capillary rheometer, and the swell ratio can be determined by extruding the thermoplastic elastomer composition from an orifice having a diameter of 1 mm and a length of 40 mm under conditions of a temperature of 220°C and a shear rate of 2,432 $sec^{-1}$, and dividing a diameter of the obtained strand by the orifice diameter, and is measured, for example, in accordance with the method described in Examples.

A resin composition having a desired swell ratio can be produced by appropriately selecting the types and content ratios of monomers constituting the polymer, polymerization conditions such as the type of catalyst, the type and content of the filler, and the like. After the virgin resin composition produced as described above is used for an application, a recycled resin obtained through recycling can be used to produce the propylene resin composition of the present invention.

Because the propylene resin composition of the present invention contains a recycled resin having a swell ratio of 1.3 or more, a molded article containing (or produced from) the propylene resin composition of the present invention exhibits excellent low-temperature impact strength.

In one aspect, preferred forms of the recycled resin include a pulverized molded article and a pellet obtained by granulating the pulverized molded article. More preferably, because the propylene resin composition of the present invention contains a recycled resin having a swell ratio of 1.3 or more as measured in a state of a pulverized molded article, a molded article containing (or produced from) the propylene resin composition of the present invention exhibits excellent low-temperature impact strength.

As the "recycled resin having a swell ratio of 1.3 or more" (also referred to as a component A), preferably, at least one selected from the group consisting of a propylene polymer P and an ethylene-$\alpha$-olefin copolymer E is contained, and preferably, the propylene polymer P is contained. A plurality of recycled resins may be contained as the component A.

Each component represented by "propylene polymer P" or the like is also simply referred to as "a component P" or the like.

Hereinafter, each component will be described.

Propylene polymer P (component P)

The propylene resin composition of the present invention may contain a propylene polymer P (component P) as the component A. The component P is a polymer having 50 wt% or more of monomer units derived from propylene based on 100 wt% of a total weight of the component P. Examples of the component P include a propylene homopolymer, a random copolymer of propylene and a monomer other than propylene, and a heterophasic propylene polymer material. The propylene resin composition of the present invention may contain, as the component A, only one type of component P or two or more types of component P. From the viewpoints of rigidity and impact resistance of a molded article, it is preferable that the propylene resin composition contains, as the component P, at least one selected from the group consisting of a propylene homopolymer and a heterophasic propylene polymer material.

Propylene homopolymer

When a propylene homopolymer is contained as the component P, an intrinsic viscosity ([$\eta$]) of the propylene homopolymer is preferably 0.10 to 4.00 dL/g, more preferably 0.50 to 3.00 dL/g, and still more preferably 0.70 to 2.00 dL/g, from the viewpoint of flowability of the resin composition in a molten state and the toughness of a molded article.

In the present specification, the intrinsic viscosity (unit: dL/g) means a value measured at a temperature of 135°C using tetralin as a solvent by the following method.

A reduced viscosity is measured at three points of concentrations of 0.1 g/dL, 0.2 g/dL, and 0.5 g/dL using an Ubbelohde viscometer. The intrinsic viscosity is determined by an extrapolation method in which the reduced viscosity is plotted with respect to the concentration and the concentration is extrapolated to zero. A method for calculating the intrinsic viscosity by the extrapolation method is described, for example, in "Polymer solution, Polymer Experiment 11" (published by KYORITSU SHUPPAN CO., LTD., 1982), page 491.

A molecular weight distribution (Mw/Mn) of the propylene homopolymer is preferably 3.0 or more, and more preferably 4.0 or more. The molecular weight distribution may be 15.0 or less or 10.0 or less. The molecular weight distribution is preferably 3.0 to 15.0, and more preferably 4.0 to 10.0.

In the present specification, the molecular weight distribution means a ratio of a weight average molecular weight (Mw) to a number average molecular weight (Mn) (Mw/Mn), which is calculated using the weight average molecular weight (Mw) and the number average molecular weight (Mn) measured by gel permeation chromatography (GPC) under the following conditions.

Apparatus: HLC-8121 GPC/HT manufactured by Tosoh Corporation
Separation column: three GMHHR-H(S)HT columns manufactured by Tosoh Corporation
Measurement temperature: 140°C
Carrier: orthodichlorobenzene
Flow rate: 1.0 mL/min
Sample concentration: about 1 mg/mL
Sample injection amount: 400 $\mu$L
Detector: differential refractometer
Calibration curve creation method: using standard polystyrene

The propylene homopolymer can be obtained by recycling, for example, a product produced by polymerizing propylene using a polymerization catalyst.

Examples of the polymerization catalyst include a Ziegler catalyst; a Ziegler-Natta catalyst; a catalyst containing a compound of a transition metal of Group 4 in the periodic table having a cyclopentadienyl ring and alkylaluminoxane; a catalyst containing a compound of a transition metal of Group 4 in the periodic table having a cyclopentadienyl ring, a compound that reacts with the transition metal compound to form an ionic complex, and an organoaluminum compound; and a modified catalyst formed by supporting catalytic components (a compound of a transition metal of Group 4 in the periodic table having a cyclopentadienyl ring, a compound that forms an ionic complex, an organoaluminum compound, and the like) on inorganic particles (silica, clay minerals, and the like).

Examples of the polymerization catalyst include catalysts described in JP-A-61-218606, JP-A-5-194685, JP-A-7-216017, JP-A-9-316147, JP-A-10-212319, JP-A-2004-182981, JP-A-2010-168545, and JP-A-2011-246699.

In addition, a polymer obtained by prepolymerizing propylene in the presence of the polymerization catalyst may be used as the polymerization catalyst.

Examples of the polymerization method include bulk polymerization, solution polymerization, and gas phase polymerization. Here, the bulk polymerization method refers to a method of performing polymerization by using a liquid olefin as a medium at a polymerization temperature, and the solution polymerization method refers to a method of performing polymerization in an inert hydrocarbon solvent such as propane, butane, isobutane, pentane, hexane, heptane, or octane. In addition, the gas phase polymerization method refers to a method in which a gaseous monomer is used as a medium and a gaseous monomer is polymerized in the medium.

Examples of the polymerization manner include a batch manner, a continuous manner, and a combination thereof. The polymerization manner may be a multistage manner in which a plurality of polymerization reaction tanks are connected in series.

From the viewpoint of excellent industrial and costeffectiveness, a continuous gas phase polymerization method or a bulk gas phase polymerization method in which a bulk polymerization method and a gas phase polymerization method are continuously performed is preferable.

Various conditions (polymerization conditions such as a polymerization temperature, a polymerization pressure, a monomer concentration, a catalyst loading amount, and a polymerization time) in the polymerization step can be appropriately determined according to the molecular structure of the target polymer.

Other steps may be performed before or after the polymerization step. For example, after the polymerization step, the polymer may be dried, as necessary, at a temperature lower than a melting temperature of the polymer, in order to remove a residual solvent contained in the polymer and an ultra-low molecular weight oligomer byproduced during production. Examples of the drying method include methods described in JP-A-55-75410 and JP 2565753.

Random copolymer of propylene and monomer other than propylene

The random copolymer of propylene and a monomer other than propylene contains monomer units derived from propylene and monomer units derived from a monomer other than propylene. When the random copolymer is contained as the component P, the random copolymer preferably contains 0.01 to 20 wt% of monomer units derived from a monomer other than propylene based on the weight of the random copolymer.

Examples of the monomer other than propylene include ethylene and C4-12 $\alpha$-olefins. Among them, at least one selected from the group consisting of ethylene and C4-10 $\alpha$-olefins is preferable, at least one selected from the group consisting of ethylene, 1-butene, 1-hexene, and 1-octene is more preferable, and at least one selected from the group consisting of ethylene and 1-butene is still more preferable.

Examples of the random copolymer include a propylene-ethylene random copolymer, a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer.

When a random copolymer of propylene and a monomer other than propylene is contained as the component P, an intrinsic viscosity ([$\eta$]) of the random copolymer is preferably 0.10 to 4.00 dL/g, more preferably 0.50 to 3.00 dL/g, and still more preferably 0.70 to 2.00 dL/g, from the viewpoint of flowability of the resin composition in a molten state.

A molecular weight distribution (Mw/Mn) of the random polymer is preferably 3.0 or more, and more preferably 4.0 or more. The molecular weight distribution of the random polymer may be 10.0 or less or 7.0 or less. The molecular weight distribution of the random polymer is preferably 3.0 to 10.0, and more preferably 4.0 to 7.0.

The random copolymer can be produced, for example, by polymerizing propylene and a monomer other than propylene according to a polymerization catalyst, a polymerization method, a polymerization manner, and polymerization conditions that can be used in the production of the propylene homopolymer.

Heterophasic propylene polymer material

When a heterophasic propylene polymer material is contained as the component P, the heterophasic propylene

polymer material can be produced, for example, by performing a first polymerization step of forming a polymer I and a second polymerization step of forming a polymer II. These polymerization steps can be performed according to a polymerization catalyst, a polymerization method, a polymerization manner, and polymerization conditions that can be used in the production of the propylene homopolymer.

In the heterophasic propylene polymer material, a total of the polymer I and the polymer II contained in the heterophasic propylene polymer material may be 98 to 100 wt% based on 100 wt% of a total weight of the heterophasic propylene polymer material.

As described above, the polymer I contains 80 wt% or more of monomer units derived from propylene (provided that the total weight of the polymer I is 100 wt%). The polymer I may be, for example, a propylene homopolymer and/or may contain monomer units derived from a monomer other than propylene. When the polymer I contains monomer units derived from a monomer other than propylene, a content thereof may be, for example, 0.01 wt% or more and less than 20 wt% based on the total weight of the polymer I.

Examples of the monomer other than propylene include ethylene and α-olefins of C4 or higher. Among them, at least one selected from the group consisting of ethylene and C4-10 α-olefins is preferable, at least one selected from the group consisting of ethylene, 1-butene, 1-hexene, and 1-octene is more preferable, and at least one selected from the group consisting of ethylene and 1-butene is still more preferable.

Examples of the copolymer containing monomer units derived from a monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

From the viewpoint of the dimensional stability of the molded article, the polymer I is preferably a propylene homopolymer, a propylene-ethylene copolymer, a propylene-1-butene copolymer, or a propylene-ethylene-1-butene copolymer, and more preferably a propylene homopolymer.

On the condition that a swell ratio of the heterophasic propylene polymer material is 1.3 or more, a swell ratio of the polymer I is not limited, but is preferably 1.1 or more, for example, may be 1.2 or more, or may be 1.3. An upper limit thereof is not particularly limited, but may be, for example, 2.0 or less.

A content of the polymer I is preferably 50 to 99 wt%, and more preferably 60 to 95 wt%, based on the total weight of the heterophasic propylene polymer material.

As described above, the polymer II contains monomer units derived from at least one α-olefin selected from the group consisting of ethylene and C4-12 α-olefins and monomer units derived from propylene. Preferably, the polymer II contains 30 wt% or more of monomer units derived from at least one α-olefin selected from the group consisting of ethylene and C4-12 α-olefins, and contains monomer units derived from propylene (provided that the total weight of the polymer II is 100 wt%).

In the polymer II, a content of the monomer units derived from at least one α-olefin selected from the group consisting of ethylene and C4-12 α-olefins may be 30 to 70 wt% or 35 to 60 wt% (provided that the total weight of the polymer II is 100 wt%).

In the polymer II, the at least one α-olefin selected from the group consisting of ethylene and C4-12 α-olefins is preferably at least one selected from the group consisting of ethylene and C4-10 α-olefins, more preferably at least one selected from the group consisting of ethylene, 1-butene, 1-hexene, 1-octene, and 1-decene, and still more preferably at least one selected from the group consisting of ethylene and 1-butene.

Examples of the polymer II include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. Among them, a propylene-ethylene copolymer, a propylene-1-butene copolymer, and a propylene-ethylene-1-butene copolymer are preferable, and a propylene-ethylene copolymer is more preferable.

A content of the polymer II is preferably 1 to 50 wt%, and more preferably 5 to 40 wt%, based on the total weight of the heterophasic propylene polymer material.

In the heterophasic propylene polymer material, a content of the monomer units derived from at least one α-olefin selected from the group consisting of ethylene and C4-12 α-olefins may be 0.3 to 35 wt% or 0.7 to 24 wt% (provided that the total weight of the heterophasic propylene polymer material is 100 wt%).

A content of the xylene-insoluble component (CXIS component) in the heterophasic propylene polymer material is preferably 50 to 99 wt%, more preferably 60 to 95 wt%, based on the total weight of the heterophasic propylene polymer material.

A content of the xylene-soluble component (CXS component) in the heterophasic propylene polymer material is preferably 1 to 50 wt%, more preferably 5 to 40 wt%, based on the total weight of the heterophasic propylene polymer material.

On the condition that a swell ratio of the heterophasic propylene polymer material is 1.3 or more, a swell ratio of CXIS of the heterophasic propylene polymer material is not limited, but is preferably 1.1 or more, for example, may be 1.2 or

more, or may be 1.3. An upper limit thereof is not particularly limited, but may be, for example, 2.0 or less.

In the present invention, it is considered that the CXIS component in the heterophasic propylene polymer material is mainly composed of the polymer I, and the CXS component in the heterophasic propylene polymer material is mainly composed of the polymer II.

Examples of the heterophasic propylene polymer material include a (propylene)-(propylene-ethylene) polymer material, a (propylene)-(propylene-ethylene-1-butene) polymer material, a (propylene)-(propylene-ethylene-1-hexene) polymer material, a (propylene)-(propylene-ethylene-1-octene) polymer material, a (propylene)-(propylene-1-butene) polymer material, a (propylene)-(propylene-1-hexene) polymer material, a (propylene)-(propylene-1-octene) polymer material, a (propylene)-(propylene-1-decene) polymer material, a (propylene-ethylene)-(propylene-ethylene) polymer material, a (propylene-ethylene)-(propylene-ethylene-1-butene) polymer material, a (propylene-ethylene)-(propylene-ethylene-1-hexene) polymer material, a (propylene-ethylene)-(propylene-ethylene-1-octene) polymer material, a (propylene-ethylene)-(propylene-ethylene-1-decene) polymer material, a (propylene-ethylene)-(propylene-1-butene) polymer material, a (propylene-ethylene)-(propylene-1-hexene) polymer material, a (propylene-ethylene)-(propylene-1-octene) polymer material, a (propylene-ethylene)-(propylene-1-decene) polymer material, a (propylene-1-butene)-(propylene-ethylene) polymer material, a (propylene-1-butene)-(propylene-ethylene-1-butene) polymer material, a (propylene-1-butene)-(propylene-ethylene-1-hexene) polymer material, a (propylene-1-butene)-(propylene-ethylene-1-octene) polymer material, a (propylene-1-butene)-(propylene-ethylene-1-decene) polymer material, a (propylene-1-butene)-(propylene-1-butene) polymer material, a (propylene-1-butene)-(propylene-1-hexene) polymer material, a (propylene-1-butene)-(propylene-1-octene) polymer material, a (propylene-1-butene)-(propylene-1-decene) polymer material, a (propylene-1-hexene)-(propylene-1-hexene) polymer material, a (propylene-1-hexene)-(propylene-1-octene) polymer material, a (propylene-1-hexene)-(propylene-1-decene) polymer material, a (propylene-1-octene)-(propylene-1-octene) polymer material, and a (propylene-1-octene)-(propylene-1-decene) polymer material.

Here, the description of the "(Propylene)-(propylene-ethylene) polymer material" means "heterophasic propylene polymer material in which polymer I is propylene homopolymer and polymer II is propylene-ethylene copolymer". The same applies to other similar expressions.

As the heterophasic propylene polymer material, a (propylene)-(propylene-ethylene) polymer material, a (propylene)-(propylene-ethylene-1-butene) polymer material, a (propylene-ethylene)-(propylene-ethylene) polymer material, a (propylene-ethylene)-(propylene-ethylene-1-butene) polymer material, or a (propylene-1-butene)-(propylene-1-butene) polymer material is preferable, and a (propylene)-(propylene-ethylene) polymer material is more preferable.

An intrinsic viscosity of the polymer I ($[\eta]I$) is preferably 0.10 to 4.00 dL/g, more preferably 0.50 to 3.00 dL/g, and still more preferably 0.70 to 2.00 dL/g.

An intrinsic viscosity of the polymer II ($[\eta]II$) is preferably 1.00 to 10.00 dL/g, more preferably 2.00 to 10.00 dL/g, and still more preferably 2.00 to 9.00 dL/g.

In addition, a ratio of the intrinsic viscosity of the polymer II ($[\eta]II$) to the intrinsic viscosity of the polymer I ($[\eta]I$) ($[\eta]II/[\eta]I$) is preferably 1 to 20, and more preferably 1 to 10.

Examples of a method for measuring the intrinsic viscosity of the polymer I ($[\eta]I$) include a method in which the polymer I formed from a reactor that forms the polymer I is extracted, and an intrinsic viscosity of the polymer is measured.

The intrinsic viscosity of the polymer II ($[\eta]II$) can be calculated by the following equation using, for example, the intrinsic viscosity of the heterophasic propylene polymer material ($[\eta]Total$), the intrinsic viscosity of the polymer I ($[\eta]I$), and the contents of the polymer II and the polymer I.

$$[\eta]II = ([\eta]Total - [\eta]I \times XI)/XII$$

$[\eta]Total$: intrinsic viscosity (dL/g) of heterophasic propylene polymer material
$[\eta]I$: intrinsic viscosity (dL/g) of polymer I
XI: ratio of weight of polymer I to total weight of heterophasic propylene polymer material (weight of polymer I/weight of heterophasic propylene polymer material)
XII: ratio of weight of polymer II to total weight of heterophasic propylene polymer material (weight of polymer II/weight of heterophasic propylene polymer material)

Here, XI and XII can be determined from a mass balance during polymerization.

Note that XII may be calculated by measuring the heat of fusion of the polymer I and the heat of fusion of the heterophasic propylene polymer material and using the following equation.

$$XII = 1 - (\Delta Hf)T/(\Delta Hf)P$$

$(\Delta Hf)T$: heat of fusion (J/g) of heterophasic propylene polymer material

($\Delta$Hf)P: heat of fusion (J/g) of polymer I

An intrinsic viscosity ([η]CXIS) of the CXIS component is preferably 0.10 to 4.00 dL/g, more preferably 0.50 to 3.00 dL/g, and still more preferably 0.70 to 2.00 dL/g.
An intrinsic viscosity ([η]CXS) of the CXS component is preferably 1.00 to 10.00 dL/g, more preferably 2.00 to 10.00 dL/g, and still more preferably 2.00 to 9.00 dL/g.
A ratio of the intrinsic viscosity ([η]CXS) of the CXS component to the intrinsic viscosity ([η]CXIS) of the CXIS component ([η]CXS/[η]CXIS) is preferably 1 to 20, and more preferably 1 to 10.
A molecular weight distribution (Mw(I)/Mn(I)) of the polymer I is preferably 3.0 or more, and more preferably 4.0 or more.
A molecular weight distribution (Mw(CXIS)/Mn(CXIS)) of the CXIS component is preferably 3.0 or more, and more preferably 4.0 or more.
In the present specification, the melt flow rate refers to a value measured in accordance with JIS K7210.

Ethylene-α-olefin copolymer E (component E)

The propylene resin composition of the present invention may contain an ethylene-α-olefin copolymer E (component E) as the component A. The component E is a polymer in which, based on 100 wt% of a total weight of the component E, a total content of monomer units derived from ethylene and monomer units derived from α-olefins of C4 or higher is 50 wt% or more, and preferably, the total content is 98 to 100 wt%. The component E may be an ethylene-α-olefin random polymer Er.
Examples of α-olefins of C4 or higher include C4-12 α-olefins. Examples of C4-12 α-olefins include 1-butene, 1-pentene, 1-hexene, 4-methyl-1-pentene, 1-octene, and 1-decene. Among them, 1-butene, 1-hexene, and 1-octene are preferable. The α-olefin may be an α-olefin having a cyclic structure such as vinylcyclopropane or vinylcyclobutane.
Examples of the component E include an ethylene-1-butene copolymer, an ethylene-1-hexene copolymer, an ethylene-1-octene copolymer, an ethylene-1-decene copolymer, an ethylene-(3-methyl-1-butene) copolymer, and a copolymer of ethylene and an α-olefin having a cyclic structure.
In the component E, the content of the monomer units derived from α-olefin of C4 or higher is preferably 1 to 49 wt%, more preferably 5 to 49 wt%, and still more preferably 24 to 49 wt%, based on the total weight of the component E.
A density of the component E is preferably 0.85 to 0.89 g/cm$^3$, more preferably 0.85 to 0.88 g/cm$^3$, and still more preferably 0.85 to 0.87 g/cm$^3$, from the viewpoint of impact resistance of the molded article.
In one aspect, a melt flow rate (MFR) of the component A (temperature: 230°C, load: 2.16 kgf) is preferably 0.1 to 300 g/10 min or more, from the viewpoint of moldability of the resin composition and/or low-temperature impact strength of a molded article. A lower limit of the MFR is more preferably 1 g/10 min and may be 5 g/10 min, 10 g/10 min, 15 g/10 min, 20 g/10 min, 25 g/10 min, or 30 g/10 min. An upper limit of the MFR is more preferably 200 g/10 min, and may be 100 g/10 min, 80 g/10 min, 70 g/10 min, 60 g/10 min, 50 g/10 min, or 40 g/10 min. From the viewpoint of moldability of the resin composition, an MFR of the recycled resin A is preferably 20 g/10 min or more.

Method for producing component E

The component E may be produced by polymerizing ethylene and α-olefins of C4 or higher using a polymerization catalyst.
Examples of the polymerization catalyst include a homogeneous catalyst represented by a metallocene catalyst and a Ziegler-Natta catalyst.
Examples of the homogeneous catalyst include a catalyst containing a compound of a transition metal of Group 4 in the periodic table having a cyclopentadienyl ring and alkylaluminoxane; a catalyst containing a compound of a transition metal of Group 4 in the periodic table having a cyclopentadienyl ring, a compound that reacts with the transition metal compound to form an ionic complex, and an organoaluminum compound; and a modified catalyst formed by supporting catalytic components (a compound of a transition metal of Group 4 in the periodic table having a cyclopentadienyl ring, a compound that forms an ionic complex, an organoaluminum compound, and the like) on inorganic particles (silica, clay minerals, and the like).
Examples of Ziegler-Natta catalyst include a catalyst in which a titanium-containing solid transition metal component and an organometallic component are combined.
The component E may be one obtained by recycling a used commercially available product. Examples of the commercially available component E include ENGAGE (registered trademark) manufactured by Dow Chemical Japan Ltd., TAFMER (registered trademark) manufactured by Mitsui Chemicals, Inc., NEO-ZEX (registered trademark) and ULT-ZEX (registered trademark) manufactured by Prime Polymer Co., Ltd., and EXCELLEN FX (registered trademark), SUMICASEN (registered trademark), and ESPRENE SPO (registered trademark) manufactured by Sumitomo Chemical

Co., Ltd.

The propylene resin composition of the present invention may contain, as the component A, a component other than the components P and E. Examples thereof include thermoplastic resins (polystyrenes (for example, polystyrene, poly(p-methylstyrene), poly($\alpha$-methylstyrene), and AS (acrylonitrile/styrene copolymer) resins), ABS (acrylonitrile/butadiene/styrene copolymer) resins, AAS (special acrylic rubber/acrylonitrile/styrene copolymer) resins, ACS (acrylonitrile/-chlorinated polyethylene/styrene copolymer) resins, polychloroprene, chlorinated rubber, polyvinyl chloride, polyvinylidene chloride, acrylic resins, ethylene/vinyl alcohol copolymer resins, fluororesins, polyacetal, grafted polyphenylene ether resins, and polyphenylene sulfide resins, polyurethane, polyamide, polyester resins (for example, polyethylene terephthalate and polybutylene terephthalate), polycarbonate, polysulfone, polyether ether ketone, polyether sulfone, aromatic polyester resin, polybutadiene, 1,2-polybutadiene, polyisoprene, styrene/butadiene copolymers, butadiene/acrylonitrile copolymers, natural rubber, and the like), epoxy resins, diallyl phthalate prepolymers, silicone resins, silicone rubbers, epichlorohydrin rubber, acrylic rubber, and PLA resins (polylactic acid) produced by polymerizing plant-derived monomers extracted from bio raw materials.

In one aspect, the recycled resin A (component A) contained in the propylene resin composition of the present invention may contain a filler F.

Filler F (component F)

Examples of the component F include an inorganic filler FI and an organic filler FO. The component A may contain only one type of component F or two or more types of component F.

Examples of the inorganic filler FI include glass, silicate mineral, alumina, silica, silicon dioxide, titanium oxide, iron oxide, aluminum oxide, magnesium oxide, antimony oxide, barium ferrite, strontium ferrite, beryllium oxide, magnesium hydroxide, aluminum hydroxide, basic magnesium carbonate, calcium carbonate, magnesium carbonate, carbonate mineral, calcium sulfate, magnesium sulfate, basic magnesium sulfate, calcium sulfite, carbon black, and cadmium sulfide.

Examples of the organic filler FO include polyester, aromatic polyamide, cellulose, and vinylon.

The shape of the filler may be a plate shape, a needle shape, or a fiber shape.

From the viewpoint of rigidity, impact resistance, and dimensional stability of the molded article, the component F is preferably an inorganic filler, and more preferably talc which is a plate-shaped silicate mineral.

An average particle diameter D50[L] of the component F is preferably 20.0 μm or less, and more preferably 15.0 μm or less, from the viewpoint of rigidity, impact resistance, and dimensional stability of a molded article. The average particle diameter D50[L] of the component F may be 2.0 μm or more or 4.0 μm or more. The average particle diameter D50 [L] of the component F is preferably 2.0 to 20.0 μm and more preferably 4.0 to 15.0 μm.

An average particle diameter D50[S] of the component F is preferably 5.0 μm or less, and more preferably 3.0 μm or less, from the viewpoint of rigidity, impact resistance, and dimensional stability of a molded article.

The average particle diameter D50[S] of the component F may be 0.5 μm or more or 1.0 μm or more. The average particle diameter D50[S] of the component F is preferably 0.5 to 5.0 μm and more preferably 1.0 to 3.0 μm.

A ratio of the average particle diameter D50[L] of the component F to the average particle diameter D50[S] of the component F (D50[L]/D50[S]) may be 1.5 or more or 2.5 or more, from the viewpoint of rigidity and dimensional stability of a molded article. D50[L]/D50[S] may be 10 or less or 8 or less. D50[L]/D50[S] may be 1.5 to 10, 1.5 to 8, 2.5 to 10, or 2.5 to 8.

In the present specification, the "average particle diameter D50[L]" is determined based a volume-based particle diameter distribution measurement data measured by a laser diffraction method according to a method specified in JIS R1629. In the particle diameter distribution measurement data, the average particle diameter D50[L] refers to a particle diameter (particle diameter equivalent to 50%) when a cumulative number of particles from a smaller particle diameter side reaches 50%. The particle diameter defined as described above is generally referred to as a "50% equivalent particle diameter" and is denoted by "D50".

In the present specification, the "average particle diameter D50[S]" is determined based a volume-based particle diameter distribution measurement data measured by a centrifugal sedimentation method according to a method specified in JIS R1619. In the particle diameter distribution measurement data, the average particle diameter D50[S] refers to a particle diameter (particle diameter equivalent to 50%) when a cumulative number of particles from a smaller particle diameter side reaches 50%.

The larger the ratio of the average particle diameter D50[L] to the average particle diameter D50[S] of the component F (D50[L]/D50[S]), the better the rigidity and dimensional stability of the molded article.

In one aspect, the component (A) and/or the component (B) contain ash. The ash means a component remaining as ash after a crushed material is heated at 600°C for 60 minutes. An ash content is determined by the following method.

(Method for measuring ash content)

A crucible is heated at 600°C for 60 minutes using an electric furnace, taken out, cooled in a desiccator for 1 hour, and then weighed using an analytical balance. 10 g of a crushed material is weighed into the crucible, heated at 600°C for 60 minutes using an electric furnace, and subjected to complete ashing. Next, the crucible is cooled in a desiccator for 1 hour, a mass of ash is measured using an analytical balance to an accuracy of 0.1 mg, and then, an ash content (mass%) with respect to the component (A) or the component (B) is calculated.

When the component (A) or the component (B) contains a filler, most of the filler is contained in the ash content of the component (A) or the component (B). When the component (A) or the component (B) contains a filler, the content of the filler is considered to substantially correspond to the ash content of the component (A) or the component (B).

Virgin propylene polymer

The propylene resin composition of the present invention contains a virgin propylene polymer. For the definitions and preferred aspects of the propylene polymer, the description of the component P described above is applied.

The propylene resin composition of the present invention may contain components other than the "recycled resin having a swell ratio of 1.3 or more" and the "virgin propylene polymer." Examples thereof include a recycled resin having a swell ratio of less than 1.3. For the definitions and preferred aspects thereof, the description of the component A (the component P, the component E, and the like) described above applies, except for the description of the swell ratio. Other examples include a virgin resin other than the virgin propylene polymer. For the definitions and preferred aspects thereof, the description of the component A (the component E and the like) described above applies, except for the description relating to the swell ratio, recycling, and the component P. Other examples include a filler. For the definitions and preferred aspects thereof, the description of the component F described above applies. The other examples include neutralizers, antioxidants, ultraviolet absorbers, nucleating agents, lubricants, antistatic agents, antiblocking agents, processing aids, organic peroxides, colorants (inorganic pigments, organic pigments, pigment dispersants, and the like), blowing agents, foaming nucleating agents, plasticizers, flame retardants, crosslinking agents, crosslinking auxiliaries, brightness enhancers, antibacterial agents, and light diffusing agents.

Content of each component

In the propylene resin composition of the present invention, the content of each component is not particularly limited. From the viewpoint of low-temperature impact strength of a molded article, preferably, the content of the component A is 40 to 99 parts by weight, 50 to 95 parts by weight, or 60 to 90 parts by weight, with respect to a total of 100 parts by weight of the contents of the components A and **E.** Preferably, the content of the component A is 40 to 99 parts by weight, 50 to 95 parts by weight, or 60 to 90 parts by weight, with respect to 100 parts by weight of the propylene resin composition.

In the propylene resin composition of the present invention, from the viewpoint of low-temperature impact strength of a molded article, preferably, the content of the component E is 1 to 60 parts by weight, 5 to 50 parts by weight, or 10 to 40 parts by weight, with respect to the total of 100 parts by weight of the contents of the components A and E. Preferably, the content of the component E is 1 to 60 parts by weight, 5 to 50 parts by weight, or 10 to 40 parts by weight, with respect to 100 parts by weight of the propylene resin composition.

When the propylene resin composition of the present invention contains a component F as a component other than the components A and E, a content of the component F may be, for example, 0.1 to 50 parts by weight, 1 to 40 parts by weight, or 5 to 30 parts by weight, with respect to a total of 100 parts by weight of the contents of the components A, E, and F. As another aspect, the content of the component F may be 0.1 to 50 parts by weight, 1 to 40 parts by weight, or 5 to 30 parts by weight, with respect to 100 parts by weight of the propylene resin composition.

From the viewpoint of low-temperature impact strength of a molded article, it is preferable that a total amount of polymers contained is 70 wt% or more, 80 wt% or more, or 90 wt% or more, based on the total weight of the propylene resin composition of the present invention.

From the viewpoint of low-temperature impact strength of a molded article, the total content of the components A and E is preferably 50 wt% or more, 60 wt% or more, 70 wt% or more, 80 wt% or more, or 90 wt% or more, based on the total weight of the propylene resin composition of the present invention.

Method for preparing propylene resin composition

The propylene resin composition of the present invention can be obtained by melt-kneading each raw material component. A temperature during the melt-kneading may be 180°C or higher, 180 to 300°C, or 180 to 250°C.

For the melt-kneading, a Banbury mixer, a singlescrew extruder, a twin-screw co-direction rotary extruder, or the

like can be used.

The order of kneading the raw material components is not particularly limited. For example, the raw material components may be kneaded together at once, or after kneading some of the raw material components, the obtained kneaded product and the other components may be kneaded together.

The shape of the propylene resin composition is not particularly limited, and the propylene resin composition may have, for example, a strand shape, a sheet shape, a flat plate shape, or a pellet shape. The pellet-shaped resin composition can be prepared, for example, by forming a strand-shaped resin composition and then cutting the resin composition into an appropriate length.

From the viewpoint of molding processability of the resin composition and production stability in the case of producing a molded article, the shape of the resin composition before being molded into a molded article is preferably a pellet shape having a length of about 1 to 50 mm.

Properties of propylene resin composition

In one aspect, a melt flow rate (MFR) of the propylene resin composition of the present invention (temperature: 230°C, load: 2.16 kgf) is preferably 1 to 300 g/10 min, from the viewpoint of moldability of the resin composition and/or low-temperature impact strength of a molded article. A lower limit of the MFR may be 110 g/10 min, 12 g/10 min, or 15 g/10 min. An upper limit of the MFR may be 100 g/10 min, 70 g/10 min, or 40 g/10 min.

The propylene resin composition of the present invention can be used as a material for forming a molded article by molding. The propylene resin composition of the present invention is preferably used as a material for injection molding. Hereinafter, an example of an injection molded article produced using the propylene resin composition of the present invention as a material for injection molding will be described.

Molded article

The molded article of the present invention contains (is formed of) the propylene resin composition of the present invention. The molded article of the present invention has excellent low-temperature impact strength.

The injection molded article can be produced by an injection molding method. Examples of the injection molding method include a general injection molding method, an injection foam molding method, a supercritical injection foam molding method, an ultrahigh speed injection molding method, an injection compression molding method, a gas-assist injection molding method, a sandwich molding method, a sandwich foam molding method, and an insert and outsert molding method. The shape of the injection molded article is not particularly limited.

The injection molded article of the present invention can be preferably used for, for example, automobile material applications, household electric appliance material applications, and container applications, and is particularly suitable for automobile interior and exterior applications. Examples of automobile interior and exterior parts include a door trim, a pillar, an instrument panel, and a bumper.

EXAMPLES

Hereinafter, the present invention will be described in more detail with reference to Examples. However, the present invention is not limited to these Examples.

Recycled resins A1 to A4

Recycled resins A1 to A4 having a swell ratio of 1.3 or more were prepared. All of these are recycled propylene compositions.

Recycled resin A1
Swell ratio: 1.30
MFR (230°C, 2.16 kg load): 53.9 g/10 min
Ash content: 22.4 wt%
Recycled resin A2
Swell ratio: 1.34
MFR (230°C, 2.16 kg load): 45.1 g/10 min
Ash content: 7.0 wt%
Recycled resin A3
Swell ratio: 1.35
MFR (230°C, 2.16 kg load): 40.7 g/10 min

Ash content: 16.4 wt%
Recycled resin A4
Swell ratio: 1.37
MFR (230°C, 2.16 kg load): 32.4 g/10 min
Ash content: 8.6 wt%
Recycled resins B1 to B3
Recycled resins B1 to B3 having a swell ratio of less than 1.3 were prepared. All of these are recycled propylene compositions.
Recycled resin B1
Swell ratio: 1.10
MFR (230°C, 2.16 kg load): 43.2 g/10 min
Ash content: 19.9 wt%
Recycled resin B2
Swell ratio: 1.24
MFR (230°C, 2.16 kg load): 34.1 g/10 min
Ash content: 13.3 wt%
Recycled resin B3
Swell ratio: 1.27
MFR (230°C, 2.16 kg load): 24.8 g/10 min
Ash content: 29.3 wt%

Method for measuring swell ratio (unit: -)

Using a capillary rheometer (Capilograph 1D, manufactured by Toyo Seiki Seisaku-sho, Ltd.) equipped with a capillary having a diameter (D) of 1 mm and a length (L) of 40 mm, that is, L/D = 40, a molten composition was extruded from an outlet of the capillary at a test temperature of 220°C and a shear rate of 2,432 $sec^{-1}$ (a piston descending speed of 200 mm/min) to prepare a strand. A diameter of the strand was measured by a laser at a position 12 mm vertically downward from the outlet of the capillary. A swell ratio at each shear rate is expressed by the following equation.

Swell ratio = Diameter of strand (mm)/Diameter of capillary (mm)

Virgin propylene polymer

As the virgin propylene polymer, the following virgin heterophasic propylene polymer material was prepared.

Virgin propylene polymer C1

A propylene polymer (heterophasic propylene polymer material) C1 was produced by a gas-phase polymerization method in the presence of a polymerization catalyst obtained by the method described in Example 1 of JP-A-2004-182981. The physical properties of the obtained component C1 are as shown below.

MFR (230°C, 2.16 kg load): 27.5 g/10 min
CXIS content: 84.1 wt%
CXS content: 15.9 wt%

Preparation of propylene resin composition

After weighing the raw materials having the composition shown in Table 1, and as additives, 0.03 parts by mass of "calcium stearate", 0.03 parts by mass of "Sumilizer GA80", and 0.03 parts by mass of "SONGNOX6260", respectively, all components were mixed, and a pellet-shaped propylene resin composition was obtained by melt-kneading under the following conditions.
Kneading machine: twin-screw kneading machine KZW-15/45MG (inner cylinder diameter: 15.5 mm, screw outer diameter: 15.0 mm, L/D = 45) manufactured by TECHNOVEL CORPORATION

Cylinder temperature: 200°C;
Screw rotation speed: 500 rpm;
Screen mesh: two stacked screens of 100 mesh and 50 mesh;
Extrusion rate: 6 kg/hr

Production of injection molded bodies for evaluation of low-temperature impact strength and Rockwell hardness

Each pulverized molded article was injection-molded under the following conditions within the range described in JIS K7152 to produce injection molded bodies for evaluation of low-temperature impact strength and Rockwell hardness. The resin composition melted in an injection molding machine was supplied from a gate into a mold cavity by the injection molding machine.

Injection molding machine: TOYO MACHINERY & METAL CO., LTD. Si30III
(clamping force: 30 tons; cylinder diameter: 18 mm)
Cylinder temperature: 220°C
Mold temperature: 50°C
Injection speed: 20 mm/sec
Cooling time: 30 seconds

Measurement of low-temperature impact strength

Test specimens having a thickness of 4 mm were cut out from the above-described injection molded bodies, and measurement was performed at -30°C in accordance with ASTM D256 using an IZOD impact tester (manufactured by Toyo Seiki Seisaku-sho, Ltd.). The results are shown in Table 1.

Measurement of Rockwell hardness

Test specimens having a thickness of 4 mm were cut out from the above-described injection molded bodies, and measurement was performed in accordance with ASTM D785 using a Rockwell hardness tester (ARK-F1000, manufactured by Akashi Seisakusho, Ltd.) on the R scale. The results are shown in Table 1.

[Table 1]

| Component | MFR | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Recycled resin A1 | 53.9 g/10 min | wt% | 30 | - | - | - | - | - | - | - | - | - |
| Recycled resin A2 | 45.1 g/10 min | wt% | - | 30 | 50 | 70 | 90 | - | - | - | - | - |
| Recycled resin A3 | 40.7 g/10 min | wt% | - | - | - | - | - | 30 | - | - | - | - |
| Recycled resin A4 | 32.4 g/10 min | wt% | - | - | | | | - | 30 | - | - | - |
| Recycled resin B1 | 43.2 g/10 min | wt% | - | - | - | - | - | - | - | 30 | - | - |
| Recycled resin B2 | 34.1 g/10 min | wt% | - | - | - | - | - | - | - | - | 30 | - |
| Recycled resin B3 | 24.8 g/10 min | wt% | - | - | | | | - | - | - | - | 30 |
| Virgin propylene polymer C1 | 27.5 g/10 min | wt% | 70 | 70 | 50 | 30 | 10 | 70 | 70 | 70 | 70 | 70 |
| Swell ratio of components A1 to A4 or B1 to B3 | | - | 1.30 | 1.34 | 1.34 | 1.34 | 1.34 | 1.35 | 1.37 | 1.10 | 1.24 | 1.27 |
| IZOD impact strength (-30°C) | | kJ / $m^2$ | 4.7 | 5.7 | 5.5 | 6.1 | 5.3 | 5.1 | 4.7 | 4.1 | 4.0 | 4.1 |
| Rockwell hardness | | - | 84.6 | 84.0 | 78.5 | 72.0 | 82.3 | 84.9 | 83.9 | 84.9 | 83.8 | 84.1 |

Examples 1 to 7 are Examples of the present invention, and Examples 8 to 10 are Comparative Examples.

It can be seen from Table 1 that the molded bodies according to Examples exhibit excellent low-temperature impact strength. That is, it was confirmed that, according to the propylene resin composition of the present invention, molded bodies having excellent low-temperature impact strength can be produced, and the molded bodies of the present invention exhibit excellent low-temperature impact strength.

## Claims

1. A propylene resin composition comprising a recycled resin having a swell ratio of 1.3 or more as measured under the following conditions, and a virgin propylene polymer:
measurement temperature = 220°C, orifice L/D = 40 mm/1 mm, shear rate = 2,432 $sec^{-1}$.

2. The propylene resin composition according to claim 1, wherein the swell ratio of the recycled resin is 2.0 or less.

3. The propylene resin composition according to claim 1 or 2, wherein the recycled resin is a recycled propylene composition containing a propylene polymer.

4. The propylene resin composition according to any one of claims 1 to 3, wherein the virgin propylene polymer is a heterophasic propylene polymer material.

5. The propylene resin composition according to any one of claims 1 to 4, wherein a content of the recycled resin is 30 to 90 parts by weight with respect to 100 parts by weight of the propylene resin composition.

6. The propylene resin composition according to any one of claims 1 to 5, wherein a content of the virgin propylene polymer is 10 to 70 parts by weight with respect to 100 parts by weight of the propylene resin composition.

7. The propylene resin composition according to any one of claims 1 to 6, wherein a total amount of polymers contained is 70 wt% or more based on a total weight of the propylene resin composition.

8. The propylene resin composition according to any one of claims 1 to 7, wherein the recycled resin contains an ethylene-$\alpha$-olefin copolymer.

9. The propylene resin composition according to claim 3, wherein the propylene resin composition contains, as the propylene polymer, at least one selected from the group consisting of a propylene homopolymer and a heterophasic propylene polymer material.

10. The propylene resin composition according to any one of claims 1 to 9, wherein a recycled resin that is different from the recycled resin and has a swell ratio of 1.3 or more as measured under the conditions described in claim 1 (referred to as "different recycled resin") is contained.

11. The propylene resin composition according to claim 10, wherein the different recycled resin contains an ethylene-$\alpha$-olefin copolymer.

12. The propylene resin composition according to any one of claims 1 to 11, wherein the virgin propylene polymer includes a propylene homopolymer.

13. The propylene resin composition according to any one of claims 1 to 12, further comprising an inorganic filler.

14. The propylene resin composition according to claim 13, wherein the inorganic filler includes a recycled inorganic filler.

15. The propylene resin composition according to any one of claims 1 to 14, wherein the propylene resin composition contains an ethylene-$\alpha$-olefin copolymer as a component other than the recycled resin.

16. A molded article comprising the propylene resin composition according to any one of claims 1 to 15.

17. A method for producing the propylene resin composition according to any one of claims 1 to 15, the method comprising a step of melt-kneading the recycled resin and the virgin propylene polymer.

## INTERNATIONAL SEARCH REPORT

International application No.
**PCT/JP2024/036661**

**A. CLASSIFICATION OF SUBJECT MATTER**

***C08L 23/10***(2006.01)i; ***C08K 3/013***(2018.01)i; ***C08L 23/08***(2025.01)i
FI: C08L23/10; C08L23/08; C08K3/013

According to International Patent Classification (IPC) or to both national classification and IPC

**B. FIELDS SEARCHED**

Minimum documentation searched (classification system followed by classification symbols)

C08L23/10; C08K3/013; C08L23/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/217829 A1 (SUMITOMO CHEMICAL COMPANY, LIMITED) 29 October 2020 (2020-10-29) claims, examples, paragraphs [0015], [0117] | 1-17 |
| A | JP 2009-263470 A (SUMITOMO CHEMICAL COMPANY, LIMITED) 12 November 2009 (2009-11-12) claims, examples | 1-17 |
| A | JP 2013-129757 A (JAPAN POLYPROPYLENE CORP.) 04 July 2013 (2013-07-04) claims, examples | 1-17 |
| A | JP 2000-838 A (SUMITOMO CHEMICAL CO., LTD.) 07 January 2000 (2000-01-07) claims, examples | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2024** | **14 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/036661**

| Patent document cited in search report | Publication date (day/month/year) | Patent family member(s) | Publication date (day/month/year) |
|---|---|---|---|
| WO 2020/217829 A1 | 29 October 2020 | US 2022/0186012 A1<br>claims, examples, paragraphs [0045], [0193]<br>EP 3960812 A1<br>CN 113767145 A | |
| JP 2009-263470 A | 12 November 2009 | US 2009/0270561 A1<br>claims, examples<br>CN 101565528 A | |
| JP 2013-129757 A | 04 July 2013 | (Family: none) | |
| JP 2000-838 A | 07 January 2000 | US 6169144 B1<br>claims, examples | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007277366 A
- JP 61218606 A
- JP 5194685 A
- JP 7216017 A
- JP 9316147 A
- JP 10212319 A
- JP 2004182981 A
- JP 2010168545 A
- JP 2011246699 A
- JP 55075410 A
- JP 2565753 B